# EUROPÄISCHE PATENTSCHRIFT

(11) **EP 3 459 669 B1**
(45) Veröffentlichungstag und Bekanntmachung des Hinweises auf die Patenterteilung: **28.02.2024**
(21) Anmeldenummer: 18192381.4
(22) Anmeldetag: 04.09.2018
(51) Int. Cl.: B23K 9/10

(54) **SCHWEISSSTROMQUELLE MIT VERBESSERTER FUNKTIONSROBUSTHEIT**
WELDING POWER SOURCE WITH IMPROVED FUNCTIONAL ROBUSTNESS
SOURCE DE COURANT DE SOUDAGE À FIABILITÉ DE FONCTIONNEMENT AMÉLIORÉE

(30) Priorität: 22.09.2017 DE 102017122068
(43) Veröffentlichungstag der Anmeldung: 27.03.2019
(73) Patentinhaber: Illinois Tool Works, Inc., Glenview, Illinois 60025 (US)
(72) Erfinder: FOH, Marcel, Glenview, Illinois, 60025 (US)
(74) Vertreter: HGF

(56) Entgegenhaltungen:
- WO-A2-2014/039878
- US-A1- 2013 112 673

## Beschreibung

Die Erfindung betrifft eine Schweißstromquelle, aufweisend ein aus metallischem Werkstoff gebildetes Gehäuse, einen Schweißinverter, eine digitale, elektronische Schweißprozess-Recheneinheit und eine Mensch-Maschine-Schnittstelleneinhchung (siehe, z.B., WO 2014/039878, welche den Oberbegriff des Anspruchs 1 bildet). Es handelt sich bevorzugt um eine Schweißstromquelle für Orbitalschweißvorrichtungen. Derartige Schweißstromquellen sind im Stand der Technik hinlänglich bekannt.

Die Erfinder befanden diese insofern als nachteilig, als dass zeitweise Funktionsstörungen im Bereich von Mensch-Maschine-Schnittstelleneinrichtungen auftreten. Aufgabe der vorliegenden Erfindung ist es, diese Nachteile zu verbessern. Die Aufgabe wird durch den unabhängigen Anspruch 1 gelöst.

Vorteilhafte Weiterbildungen sind in den Unteransprüchen definiert.

Erfindungsgemäß wird die Aufgabe gelöst durch eine Schweißstromquelle aufweisend ein aus metallischem Werkstoff gebildetes Gehäuse, einen Schweißinverter, eine digitale, elektronische Schweißprozess-Recheneinheit und eine Mensch-Maschine-Schnittstelleneinrichtung,
wobei die Schweißprozess-Recheneinheit eingerichtet ist, den Schweißinverter anzusteuern,
wobei die Schweißprozess-Recheneinheit und der Schweißinverter in dem Gehäuse angeordnet sind und die Mensch-Maschine-Schnittstelleneinrichtung außerhalb des Gehäuses an der Schweißstromquelle befestigt ist, wobei die Schweißstromquelle zusätzlich eine digitale, elektronische Mensch-Maschine-Recheneinheit aufweist, welche außerhalb des Gehäuses an der Schweißstromquelle befestigt ist, und wobei die Mensch-Maschine-Schnittstelleneinrichtung an die Mensch-Maschine-Recheneinheit angeschlossen ist, und wobei die Mensch-Maschine-Recheneinheit und die Schweißprozess-Recheneinheit über eine Kommunikationsverbindung, z.B. Busverbindung oder Ethernet, miteinander vernetzt sind und ein Rechnernetz bilden.

Hierdurch wird die Fehleranfälligkeit der Schweißstromquelle verringert. Die Erfinder haben herausgefunden, dass durch die beim Schweißen entstehenden elektromagnetischen Felder Mensch-Maschine-Schnittstellenfunktionen zumindest zeitweise fehlerhaft sind. Zur Lösung des Problems wird erfindungsgemäß eine separate zweite Recheneinheit verwendet, welche durch das Gehäuse besser abgeschirmt von den felderzeugenden schweißtechnischen Einheiten ist und welche die Mensch-Maschine-Schnittstelle direkt ansteuert.

Unter einem aus metallischem Werkstoff gebildeten Gehäuse wird bevorzugt verstanden, dass zumindest eine Gehäusewand als eine Trennwand zwischen Schweißprozess-Recheneinheit / Schweißinverter und Mensch-Maschine-Recheneinheit / Mensch-Maschine-Schnittstelleneinrichtung aus metallischem Werkstoff gebildet ist. Bevorzugt ist das Gehäuse an mehreren Seiten, bevorzugt allen Seiten aus metallischem Werkstoff gebildet.

Unter einer digitalen, elektronischen Recheneinheit bzw. digitalem Computer wird bevorzugt eine primär selbstständige, elektronische Rechnerhardware verstanden. Sie weist bevorzugt eine CPU, Arbeitsspeicher, einen internen System-Bus sowie eine Netzwerkschnittstelle auf.

Unter einer Mensch-Maschine-Schnittstelleneinrichtung wird eine Hardwarekomponente verstanden, welche eingerichtet ist, Eingaben eines Benutzers in digitale Signale zu wandeln (z.B. Mouse, Tastatur, Touchpad- oder -screen) und/oder digitale Signale in für einen Benutzer wahrnehmbare Signale zu auszugeben (z.B. Display), und/oder welche einen Anschlusspunkt (z.B. USB-Buchse) aufweist, welcher ermöglicht, digitale Signale für einen Benutzer auf einem von der Schweißstromquelle abkoppelbaren Speicher zur Verfügung zu stellen.

Die Mensch-Maschine-Schnittstelleneinrichtung ist bevorzugt über den internen System-Bus der Mensch-Maschine-Recheneinheit an die Mensch-Maschine-Recheneinheit angebunden und bildet somit bevorzugt einen Teil der Mensch-Maschine-Recheneinheit.

Unter einem Rechnernetz wird bevorzugt ein Zusammenschluss verschiedener technischer, primär selbstständiger elektronischer digital elektronischer Recheneinheiten verstanden, der die Kommunikation der einzelnen digital elektronischen Recheneinheiten untereinander ermöglicht.

Erfindungsgemäß ist die Kommunikationsverbindung eine Feldbus-Verbindung, bevorzugt eine CAN-BusVerbindung. Hierdurch wird die Robustheit weiter erhöht.

Erfindungsgemäß sind die Mensch-Maschine-Recheneinheit und die Schweißprozess-Recheneinheit mittels eines/mehrerer Optokopplers/Optokoppler oder Induktivkopplers / Induktivkoppler galvanisch voneinander getrennt. Hierdurch wird die Robustheit weiter erhöht.

In einem weiteren Ausführungsbeispiel der vorliegenden Erfindung weist die Schweißstromquelle einen Netzspannungseingang auf und sowohl die Mensch-Maschine-Recheneinheit als auch die Schweißprozess-Recheneinheit werden über den Netzspannungseingang mit Strom gespeist.

Hierdurch wird der einfache Anschlussvorgang der Schweißstromquelle an die Netzstromversorgung trotz zweier Recheneinheiten beibehalten.

In einem weiteren Ausführungsbeispiel der vorliegenden Erfindung sind die Mensch-Maschine-Recheneinheit und die Mensch-Maschine-Schnittstelleneinrichtung zusammen an einer bewegbar, bevorzugt schwenkbar, am Gehäuse gelagerten Klappe gehalten, wobei die Klappe zwischen einer offenen Stellung, in welcher die Mensch-Maschine-Schnittstelleneinrichtung durch einen Benutzer benutzbar ist, und einer geschlossenen Stellung, in welcher die Mensch-Maschine-Schnittstelleneinrichtung, bevorzugt durch die Klappe und das Gehäuse, verdeckt ist, bewegbar ist.

Hierdurch ist eine intuitive Bedienung bei gleichzeitig platzsparender Anordnung möglich, die mit geschlossener Klappe ausreichenden Transportschutz bietet.

In einem weiteren Ausführungsbeispiel der vorliegenden Erfindung weist die Mensch-Maschine-Schnittstelleneinrichtung eine oder mehrere der folgenden Einrichtungen auf: USB-Buchse, RJ45-Buchse, HDMI-Buchse, Touchscreen, Touchpad, Tastatur, Mouse, Drucker.

Die Erfindung soll nun anhand von Zeichnungen beispielhaft weiter veranschaulicht werden. Hierbei zeigen:
- FIG. 1: ein schematisches Diagramm einer ersten erfindungsgemäßen Schweißstromquelle;
- FIG. 2: eine perspektivische Ansicht einer zweiten erfindungsgemäßen Schweißstromquelle.

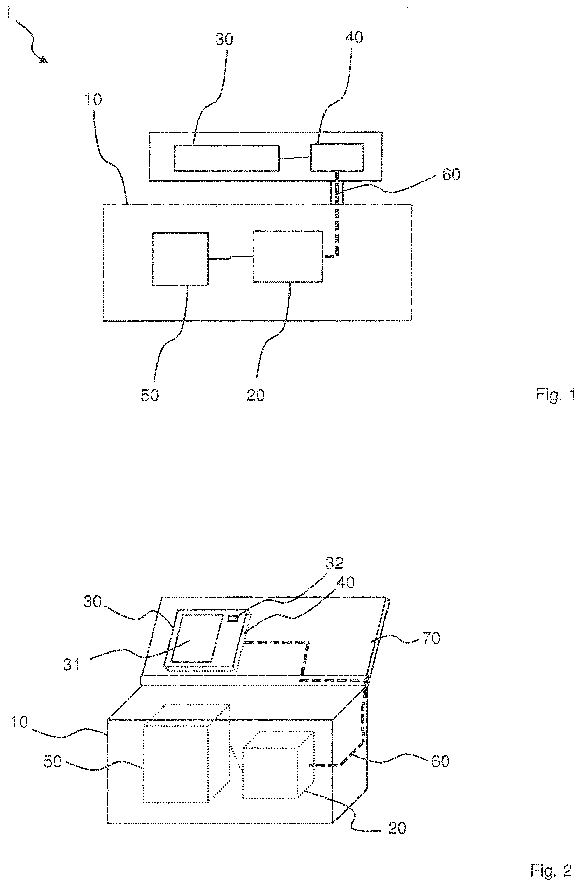

FIG. 1 zeigt eine Schweißstromquelle 1 aufweisend ein aus metallischem Werkstoff gebildetes Gehäuse 10, einen Schweißinverter 50, eine digitale, elektronische Schweißprozess-Recheneinheit 20 und eine Mensch-Maschine-Schnittstelleneinrichtung 30. Die Schweißprozess-Recheneinheit 20 ist eingerichtet ist, den Schweißinverter 50 anzusteuern. Die Schweißprozess-Recheneinheit 20 und der Schweißinverter 50 sind in dem Gehäuse 10 angeordnet und die Mensch-Maschine-Schnittstelleneinrichtung 30 ist außerhalb des Gehäuses 10 an der Schweißstromquelle 1 befestigt. Die Schweißstromquelle 1 weist zusätzlich eine digitale, elektronische Mensch-Maschine-Recheneinheit 40 auf, welche außerhalb des Gehäuses 10 an der Schweißstromquelle 1 befestigt ist. Die Mensch-Maschine-Schnittstelleneinrichtung 30 ist an die Mensch-Maschine-Recheneinheit 40 angeschlossen und die Mensch-Maschine-Recheneinheit 40 und die Schweißprozess-Recheneinheit 20 sind über eine Kommunikationsverbindung 60 miteinander vernetzt und bilden ein Rechnernetz.

In FIG. 2 ist eine Schweißstromquelle 1 mit den Elementen der Schweißstromquelle aus FIG. 1 gezeigt. Zusätzlich ist die Kommunikationsverbindung 60 eine Can-Bus Feldbus-Verbindung. Die Mensch-Maschine-Recheneinheit 40 und die Mensch-Maschine-Schnittstelleneinrichtung 30 sind zusammen an einer schwenkbar am Gehäuse 10 gelagerten Klappe 70 gehalten. Die Klappe 70 ist zwischen einer offenen Stellung, in welcher die Mensch-Maschine-Schnittstelleneinrichtung 30 durch einen Benutzer benutzbar ist, und einer geschlossenen Stellung, in welcher die Mensch-Maschine-Schnittstelleneinrichtung 30 durch die Klappe 70 und das Gehäuse 10 verdeckt ist, bewegbar. Die Mensch-Maschine-Schnittstelleneinrichtung 30 weist eine USB-Buchse 32 und einen Touchscreen 31 auf.

### Bezugszeichenliste

- 1: Schweißstromquelle
- 10: Gehäuse
- 20: Schweißprozess-Recheneinheit
- 30: Mensch-Maschine-Schnittstelleneinrichtung
- 31: Touchscreen
- 32: USB-Buchse
- 40: Mensch-Maschine-Recheneinheit
- 50: Schweißinverter
- 60: Kommunikationsverbindung
- 70: Klappe

## Patentansprüche

1. Schweißstromquelle (1) aufweisend:
- ein aus metallischem Werkstoff gebildetes Gehäuse (10),
- einen Schweißinverter (50),
- eine digitale, elektronische Schweißprozess-Recheneinheit (20) und
- eine Mensch-Maschine-Schnittstelleneinrichtung (30),
wobei die Schweißprozess-Recheneinheit (20) eingerichtet ist, den Schweißinverter (50) anzusteuern,
wobei die Schweißprozess-Recheneinheit (20) und der Schweißinverter (50) in dem Gehäuse (10) angeordnet sind und die Mensch-Maschine-Schnittstelleneinrichtung (30) außerhalb des Gehäuses (10) an der Schweißstromquelle (1) befestigt ist,
wobei die Schweißstromquelle (1) zusätzlich eine digitale, elektronische Mensch-Maschine-Recheneinheit (40) aufweist, welche außerhalb des Gehäuses (10) an der Schweißstromquelle (1) befestigt ist, und wobei die Mensch-Maschine-Schnittstelleneinrichtung (30) an die Mensch-Maschine-Recheneinheit (40) angeschlossen ist, und wobei die Mensch-Maschine-Recheneinheit (40) und die Schweißprozess-Recheneinheit (20) über eine Kommunikationsverbindung (60) miteinander vernetzt sind und ein Rechnernetz bilden,
die Schweißstromquelle (1) ist dadurch charakterisiert, dass
die Mensch-Maschine-Recheneinheit (40) und die Schweißprozess-Recheneinheit (20) mittels eines/mehrerer Optokopplers/Optokoppler oder Induktivkopplers/Induktivkoppler galvanisch voneinander getrennt sind, und
die Kommunikationsverbindung (60) eine Feldbus-Verbindung ist.

2. Schweißstromquelle (1) gemäß Anspruch 1, wobei die Schweißstromquelle (1) einen Netzspannungseingang (50) aufweist und wobei sowohl die Mensch-Maschine-Recheneinheit (40) als auch die Schweißprozess-Recheneinheit (20) über den Netzspannungseingang (50) mit Strom gespeist werden.

3. Schweißstromquelle (1) gemäß einem der vorhergehenden Ansprüche, wobei die Mensch-Maschine-Recheneinheit (40) und die Mensch-Maschine-Schnittstelleneinrichtung (30) zusammen an einer bewegbar am Gehäuse (10) gelagerten Klappe (70) gehalten sind, und wobei die Klappe (70) zwischen einer offenen Stellung, in welcher die Mensch-Maschine-Schnittstelleneinrichtung (30) durch einen Benutzer benutzbar ist, und einer geschlossenen Stellung, in welcher die Mensch-Maschine-Schnittstelleneinrichtung (30) verdeckt ist, bewegbar ist.

4. Schweißstromquelle (1) gemäß einem der vorhergehenden Ansprüche, wobei die Mensch-Maschine-Schnittstelleneinrichtung (30) eine oder mehrere der folgenden Einrichtungen aufweist: USB-Buchse (32), RJ45-Buchse, HDMI-Buchse, Touchscreen (31), Touchpad, Tastatur, Mouse, Drucker.

## Claims

1. A welding power source (1) comprising:
- a housing (10) formed from a metallic material,
- a welding inverter (50),
- a digital, electronic welding process computing unit (20), and
- a human-machine interface device (30),
wherein the welding process computing unit (20) is configured so as to drive the welding inverter (50),
wherein the welding process computing unit (20) and the welding inverter (50) are arranged in the housing (10) and the human-machine interface device (30) is fixed to the welding power source (1) outside the housing (10),
wherein the welding power source (1) additionally comprises a digital, electronic human-machine computing unit (40) externally fixed to the welding power source (1) outside of the housing (10), and wherein the human-machine interface device (30) is connected to the human-machine computing unit (40), and wherein the human-machine computing unit (40) and the welding process computing unit (20) are networked to one another via a communication link (60)
and form a computer network, [wherein] the welding power source (1) is **characterized in that**
the human-machine computing unit (40) and the welding process computing unit (20) are galvanically separated from one another by means of one or more optocoupler(s) or inductive coupler(s), and
the communication link (60) is a field bus connection.

2. The welding power source (1) according to claim 1, wherein the welding power source (1) comprises a mains voltage input (50), and wherein both the human-machine computing unit (40) and the welding process computing unit (20) are powered via the mains voltage input (50).

3. The welding power source (1) according to any one of the preceding claims, wherein the human-machine computing unit (40) and the human-machine interface device (30) are held together on a flap (70), which is movably supported on the housing (10), and wherein the flap (70) is movable between an open position in which the human-machine interface device (30) can be used by an operator and a closed position in which the human-machine interface device (30) is obscured.

4. The welding power source (1) according to any one of the preceding claims, wherein the human-machine interface device (30) comprises one or more of the following devices: USB socket (32), RJ45 socket, HDMI socket, touch screen (31), touch pad, keyboard, mouse, printer.

## Revendications

1. Source d'alimentation de soudage (1), comprenant :
- un boîtier (10) formé à partir d'un matériau métallique,
- un inverseur de soudage (50),
- une unité de calcul de processus de soudage électronique numérique (20), et
- un dispositif d'interface homme-machine (30),
dans lequel l'unité de calcul de processus de soudage (20) est configurée de manière à entraîner l'inverseur de soudage (50),
dans lequel l'unité de calcul de processus de soudage (20) et l'inverseur de soudage (50) sont agencés dans le boîtier (10) et le dispositif d'interface homme-machine (30) est fixé à la source d'alimentation de soudage (1) à l'extérieur du boîtier (10),
dans lequel la source d'alimentation de soudage (1) comprend en outre une unité de calcul homme-machine électronique numérique (40) fixée extérieurement à la source d'alimentation de soudage (1) à l'extérieur du boîtier (10), et dans lequel le dispositif d'interface homme-machine (30) est connecté à l'unité de calcul homme-machine (40), et dans lequel l'unité de calcul homme-machine (40) et l'unité de calcul de processus de soudage (20) sont reliées en réseau l'une à l'autre via une liaison de communication (60) et forment un réseau informatique, [dans lequel] la source d'alimentation de soudage (1) est **caractérisée en ce que**
l'unité de calcul homme-machine (40) et l'unité de calcul de processus de soudage (20) sont séparées galvaniquement l'une de l'autre au moyen d'un ou plusieurs optocoupleur(s) ou coupleur(s) inductif(s), et
la liaison de communication (60) est une connexion bus de terrain.

2. Source d'alimentation de soudage (1) selon la revendication 1, dans laquelle la source d'alimentation de soudage (1) comprend une entrée de tension de secteur (50), et dans laquelle à la fois l'unité de calcul homme-machine (40) et l'unité de calcul de processus de soudage (20) sont alimentées via l'entrée de tension de secteur (50).

3. Source d'alimentation de soudage (1) selon l'une quelconque des revendications précédentes, dans laquelle l'unité de calcul homme-machine (40) et le dispositif d'interface homme-machine (30) sont maintenus ensemble sur un volet (70), qui est supporté de manière mobile sur le boîtier (10), et dans laquelle le volet (70) est mobile entre une position ouverte dans laquelle le dispositif d'interface homme-machine (30) peut être utilisé par un opérateur et une position fermée dans laquelle le dispositif d'interface homme-machine (30) est obturé.

4. Alimentation électrique de soudage (1) selon l'une quelconque des revendications précédentes, dans laquelle le dispositif d'interface homme-machine (30) comprend un ou plusieurs parmi les dispositifs suivants : prise USB (32), prise RJ45, prise HDMI, écran tactile (31), pavé tactile, clavier, souris, imprimante.
